# EUROPÄISCHE PATENTSCHRIFT

(11) **EP 1 943 005 B1**
(45) Veröffentlichungstag und Bekanntmachung des Hinweises auf die Patenterteilung: **23.06.2010**
(21) Anmeldenummer: 06806678.6
(22) Anmeldetag: 03.11.2006
(51) Int. Cl.: B01D 21/02, B01D 21/24, B01D 21/01

(54) **VERFAHREN UND VORRICHTUNG ZUM EINDICKEN VON IN ABWASSER MITGEFÜHRTEM SCHLAMM**
PROCESS AND DEVICE FOR THICKENING SLUDGE ENTRAINED IN WASTE WATER
PROCÉDÉ ET DISPOSITIF PERMETTANT D ÉPAISSIR LA BOUE CHARRIEE PAR LES EAUX USÉES

(30) Priorität: 04.11.2005 DE 102005053151
(43) Veröffentlichungstag der Anmeldung: 16.07.2008
(60) Teilanmeldung: 10001718.5
(73) Patentinhaber: EPURAMAT S.A., 5324 Contern (LU)
(72) Erfinder: KOPMEIER, Achim, L-6145 Junglinster (LU)
(74) Vertreter: Grünecker, Kinkeldey, Stockmair & Schwanhäusser Anwaltssozietät
(86) Internationale Anmeldenummer: PCT/EP2006/010574
(87) Internationale Veröffentlichungsnummer: WO 2007/051640

(56) Entgegenhaltungen:
- EP-A- 1 090 681
- DE-A1- 3 626 484
- DE-A1- 4 125 453
- DE-A1- 4 426 052
- US-A- 3 862 033

## Beschreibung

Die vorliegende Erfindung betrifft eine Vorrichtung zum Eindicken von in Abwasser mitgeführtem Schlamm.

Die vorliegende Erfindung betrifft die Behandlung von schlammführenden Abwässern, die auch als Suspensionen angesehen werden können. Die in der Suspension enthaltenen Feststoffe sind Schlammpartikel. Diese Feststofftiestandteile sollen bei der Abwasserbehandlung von dem Wasser getrennt werden. Insbesondere bei Fallgestaltungen, bei denen die Feststoffpartikel eine Dichte haben, die etwas höher, jedoch nahe der Dichte des Wassers liegt, bereitet das Trennen der Schlammpartikel unter der Wirkung der Schwerkraft größere Schwierigkeiten. Im Hinblick auf eine möglichst wirtschaftliche Abwasserbehandlung sollten sich die Schlammpartikel möglichst rasch in einem Bad absetzen und dort kontinuierlich oder diskontinuierlich abgezogen werden, während das um die Schlammpartikel befreite Wasser in dem Bad nach oben aufsteigen und dort kontinuierlich abgezogen werden soll. Ziel ist eine möglichst vollständige Feststoffabscheidung aus der Flüssigkeit, um diese in gereinigtem Zustand erneut im Kreislauf zu verwenden oder in zulässiger Qualität in die öffentliche Kanalisation einleiten zu können. Es ist bisher davon ausgegangen worden, dass bei gegebener Ausrüstung und gegebenem Durchsatz die Sedimentationsgeschwindigkeit der festen Partikel unter laminaren Bedingungen den entscheidenden Prozessparameter darstellt, der die Größe der Anlage zur Abwasserbehandlung beeinflusst. Dementsprechend lassen sich trotz der Verwendung von hochmolekularen Reagenzien als Flockungshilfsmittel, die vor dem Einleiten des Abwassers in das Bad dem Abwasser zugesetzt werden, Sedimentationsanlagen zur Absetzung von Feststoffteilchen aus dem Schlamm nur in beschränktem Umfang einsetzen.

Eine bekannte Sedimentationsanlage mit den oberbegrifflichen Merkmalen des nebengeordneten Vorrichtungsanspruchs ist aus der DE 44 26 052 bekannt. Diese vorbekannte Vorrichtung hat einen rotationssymmetrischen Behälter umfassend einen oberen zylindrischen Abschnitt und einen darunter liegenden trichterförmigen Abschnitt. Am unteren Ende des trichterförmigen Abschnitts ist eine Entnahmeöffnung zur Entnahme von Schlamm vorgesehen, welcher sich im unteren Bereich des trichterförmigen Abschnitts angesammelt hat. Konzentrisch in dem Behälter ist ein Rohr vorgesehen, welches sich zunächst nach unten hin verjüngt, um sich danach in Form einer kegelstumpfförmigen Haube zu dem Behälter hin zu öffnen. Das Rohr ist gegenüber dem Behälter höhenverschieblich und so kann das Flächenverhältnis von der durch das freie Ende der trichterförmigen Haube gebildeten Einleitungsöffnung für das Abwasser zu der in radialer Richtung außerhalb davon angeordneten Ringfläche zum Durchtritt der aufsteigenden Strömung verändert werden, sofern die Einleitungsöffnung im Bereich des trichterförmigen Abschnitts verschoben wird. Die Strömungsbedingungen sollen durch diese Verstellung so eingestellt werden, dass die Schlammpartikel möglichst rasch absinken und das von den Schlammpartikeln teilweise befreite Wasser unter für den weiteren Trennungsprozess günstigen Strömungsverhältnissen in dem Behälter aufsteigen, so dass verbleibende, üblicherweise kleinere Schlammpartikel aus dieser aufsteigenden Strömung absinken können.

Ausgehend von diesem Stand der Technik will die vorliegende Erfindung eine Vorrichtung zum Eindicken von in Abwasser mitgeführtem Schlamm mit höherer Leistungsfähigkeit angeben.

Zur Lösung des obigen Problems wird mit der vorliegenden Erfindung eine Vorrichtung mit den Merkmalen von Anspruch 1 vorgeschlagen. Neben den an sich aus dem gattungsbildenden Stand der Technik bekannten Merkmalen weist die erfindungsgemäße Vorrichtung einen im Bereich der Einleitungsöffnung angeordneten Prallkörper auf, durch den der Abwasserstrom umgelenkt wird. In der erfindungsgemäßen Vorrichtung wird der Abwasserstrom zunächst über das Fallrohr in Schwerkraftrichtung in Richtung auf das Bad eingeleitet. Am Ende dieses Fallrohres befindet sich die Einleitungsöffnung, an welcher die zunächst durch das Fallrohr umfänglich gefasste Abwasserströmung in das Bad eingeleitet wird. Erfindungsgemäß befindet sich im Bereich dieser Einleitungsöffnung der Prallkörper, durch den der Abwasserstrom umgelenkt wird, d.h. durch den der Abwasserstrom in unerheblichem Umfang in horizontaler Richtung umgelenkt wird. Dabei ist zu beachten, dass der Abwasserstrom kurz vor der Einleitungsöffnung durch eine von der zylindrischen Rohrform abweichenden Ausgestaltung des Fallrohres bereits in gewissem Umfang eine vertikale Geschwindigkeitskomponente aufgeprägt werden kann. Gleichwohl sollte der von dem Fallrohr umfänglich umgebene und geführte Abwasserstrom auch kurz vor der Einleitungsöffnung überwiegend in vertikaler Richtung strömen. Diese im Wesentlichen vertikale Strömung wird im Bereich des Prallkörpers umgelenkt in eine Strömung mit einer erheblichen horizontalen Geschwindigkeitskomponente. Das untere Ende des Fallrohres ist mit erheblichem Abstand zu der Oberfläche des Bades angeordnet. Mit anderen Worten befindet sich das Fallrohr mit erheblicher axial Erstreckung innerhalb des Bades und ist in dieses eingetaucht.

Als Prallkörper im Sinne der Erfindung ist vorzugsweise jeder Gegenstand anzusehen, der eine zur Umleitung des Abwasserstromes in dem vorgenannten Sinne geeignete Prallfläche ausbildet. Der Prallkörper ist vorzugsweise so ausgebildet, dass er die Ausbildung eines im Wesentlichen kurvenförmigen Strömungsprofils hinter der Einleitungsöffnung begünstigt, mit der die Strömungsgeschwindigkeit des Abwassers von einer in vertikaler Richtung nach unten gerichteten Ausrichtung um 180° umgelenkt wird, um innerhalb des Behälters aufzusteigen und an dessen oberen Rand als von Schlammpartikeln befreites Wasser abgezogen zu werden. Die bogenförmige Beschleunigung des Wassers kann von den Schlammpartikeln aufgrund ihrer etwas höheren Dichte nicht in gleicher Weise nachvollzogen werden, so dass diese Schlammpartikel eher in Schwerkraftrichtung innerhalb des Behälters absinken und sich in dem unteren Bereich desselben ansammeln.

Sofern das Fallrohr konzentrisch in einem zylindrisch ausgebildeten Behälter angeordnet ist, wird kurvenförmige Bewegung unmittelbar benachbart zu der Einleitungsöffnung einen relativ starken Radius und der radial äußere Teil dieser kurvenförmigen Bewegung einen relativ großen Radius ausbilden. Dieser Umstand kann benutzt werden, um in dem Fallrohr eine inhomogene Dichteverteilung des Schlamms in dem Abwasser gezielt einzustellen, so dass das Abwasser mit Schlamm partikeln höherer Dichte und/oder Größe in der Innenkurve geführt wird und sie dort aufgrund der dort herrschenden höheren Beschleunigungswerte stärker von dem Wasser trennt, wohingegen die feineren bzw. leichteren Schlammpartikeln von dem in der Außenkurve umgelenkten Wasser mitgeschleppt werden. Hierdurch ist es möglich, die rasche Abtrennung der Schlammpartikeln zu begünstigen. Geeignete Verfahren zur Einstellung einer inhomogenen Dichteverteilung innerhalb des Abwasserstroms werden vorzugsweise Trennungsverfahren sein, die sich die unterschiedlichen Dichteeigenschaften der Schlammpartikel in Zentrifugen zu Nutze machen. Ein Beispiel für ein solches Verfahren ist in der DE 39 43 416 beschrieben.

Gemäß einer bevorzugten Weiterbildung ist das Fallrohr längs verschieblich zu dem Behälter geführt und gegenüber diesem festlegbar, so dass die Lage der Einleitungsöffnung innerhalb des Behälters eingestellt werden kann.

Hierdurch ist es zum Einen möglich, das Flächenverhältnis zwischen der Fläche am Einleitungspunkt, d.h. der durch das Fallrohr gebildeten Einleitungsöffnung und der sich außerhalb dieser Einleitungsöffnung befindlichen und sich bis zu der Behälterinnenwand erstreckenden Restfläche anzupassen, wenn das Fallrohr mit seiner Einleitungsöffnung innerhalb des kegelförmigen Abschnitts des Behälters verschoben wird. Bei einer bevorzugten rotationssymmetrischen Ausbildung des Behälters handelt es sich bei der Restfläche um eine Ringfläche.

Zum Anderen kann durch die Längsverschieblichkeit der Druck am Einleitungspunkt, d.h. an der Einleitungsöffnung des Fallrohres variiert werden. Hierzu ist das Fallrohr vorzugsweise so längs verschieblich, dass die Einleitungsöffnung innerhalb eines Längenbereiches entlang der Längsachse des Behälters oberhalb des trichterförmigen Abschnitts längs verschieblich ist. Es hat sich als zweckmäßig erwiesen, allein diesen Druck am Einleitungspunkt zur Steuerung der Strömungsgeschwindigkeit des in dem Fallrohr strömenden Abwassers zu nutzen. Da die erfindungsgemäße Vorrichtung sich insbesondere für kleine Kläranlagen eignet, deren Bedienpersonal über nur geringe strömungstechnische Kenntnisse verfügt, hat es sich als vorteilhaft erwiesen, die Längsverschieblichkeit des Fallrohres so einzustellen, dass die Einleitungsöffnung nicht bis in den trichterförmigen Abschnitt verschoben werden kann. Hierzu wird beispielsweise ein Anschlag vorgesehen, mit den die unterste Position des Fallrohres innerhalb des Behälters festgelegt wird. Durch diese einfache Maßnahme wird verhindert, dass durch Einbringen der Einleitungsöffnung in den trichterförmigen Abschnitt das Flächenverhältnis von Einleitungsöffnung zu Restfläche variiert wird, was zu einer massiven Beeinflussung der Strömungs- und Sedimentationsbedingungen in dem Behälter führen kann, deren Konsequenzen von einem ungeübten Personal nicht mehr abzuschätzen ist. Kleine Kläranlagen in dem vorerwähnten Sinn sind nach dem maßgeblichen Arbeitsblatt ATV-A122 der ATV (Abwassertechnische Vereinigung) Kläranlagen mit einer Kapazität von 50 bis 500 Einwohnergleichwerten.

Gemäß einer weiteren bevorzugten Ausgestaltung der vorliegenden Erfindung hat die Vorrichtung ein Führungselement, welches die längs verschiebliche Bewegung des Fallrohres führt und welches in dem Fallrohr angeordnet ist. Zwischen diesem Führungselement, welches vorzugsweise als stabförmiges Element innerhalb des Fallrohres vorgesehen ist, und der Innenumfangsfläche des Fallrohres befinden sich mehrere Abstandselemente, die das Fallrohr relativ zu dem Führungselement in vorbestimmter Weise halten. Gedacht ist insbesondere an ein Führungselement mit sich in radialer Richtung erstreckenden Abstandselementen, die in Umfangsrichtung jeweils zwischen sich einen Strömungsdurchgang frei geben. Diese Abstandselemente dienen der Führung der Verschiebebewegung des Fallrohres relativ zu dem Führungselement und halten beide in vorbestimmter radialer Position zueinander. Durch geeignete Versteifung und und/oder Anordnung des Führungselementes an der Vorrichtung kann auf weitere abstützende Maßnahmen für das Fallrohr innerhalb des Behälters verzichtet werden. Das Fallrohr wird vibrationsfrei und an vorbestimmter Lage vorzugsweise allein durch das Führungselement in Radialrichtung des Fallrohres in dem Behälter fixiert. Die Abstandselemente können aus einem elastischen, vibrationsdämpfenden Werkstoff ausgebildet sein, so dass durch die Strömungsbedingungen verursachten Vibrationen der des Fallrohres innerhalb des Behälters gedämpft bzw. vermieden werden.

Die Verschiebebewegung des Fallrohres führende Führungselement ist gemäß einer bevorzugten Weiterbildung der vorliegenden Erfindung als Führungsrohr ausgebildet, dessen unteres Ende bis in den unteren Bereich des trichterförmigen Abschnitts reicht. Dort kann insbesondere eine weitere Abstützung des Führungselementes gegenüber dem Behälter vorgesehen sein, die zusätzlich zu einer außerhalb des Behälters und/oder oberhalb desselben angeordneten weiteren Abstützung in der Lage ist, das Führungselement in vorbestimmter Längserstreckung innerhalb des Behälters mit hoher Genauigkeit zu fixieren. Darüber hinaus bietet die Ausbildung des Führungselementes als Führungsrohr die Möglichkeit, durch Einblasen von Luft und/oder Einführen von Wasser ein verhärtetes Sediment von Schlammpartikeln aufzulösen, die sich nicht an dem unteren Ende des trichterförmigen Abschnitts durch die Entnahmeöffnung entnehmen lässt. Zur Abstützung des Führungsrohres im unteren Bereich des Behälters sollte eine Führungsrohrführung im unteren Bereich des Behälters angeordnet sein, die sich dort an der Innenwand des Behälters abstützt, gleichwohl aber einen Durchgang von Schlammpartikeln in einen darunter liegenden Bereich des Behälters zur Entnahme durch die Entnahmeöffnung erlaubt.

Nicht zuletzt zur Einstellung der Strömungsgeschwindigkeit und/oder der Strömungsausrichtung am Einleitungspunkt wird gemäß einer weiteren bevorzugten Ausgestaltung der vorliegenden Erfindung vorgeschlagen, den Prallkörper längs verschieblich zu dem Fallrohr anzuordnen. Eine solche Ausbildung wird zweckmäßigerweise dadurch verwirklicht, dass das Führungselement den Prallkörper trägt und längs verschieblich zu dem Behälter und dem Fallrohr ist. Das Führungselement sollte ferner gegenüber dem Fallrohr festlegbar sein, um eine einmal gefundene Betriebsstellung des Prallkörpers relativ zu der Einleitungsöffnung zu fixieren. Es versteht sich von selbst, dass außerhalb des Behälters eine Skalierung vorgesehen sein sollte, durch welche eine einmal gefundene Betriebsstellung des Prallkörpers relativ zu der Einleitungsöffnung wieder eingestellt werden kann.

Am unteren Ende des trichterförmigen Abschnitts befindet sich vorzugsweise ein die Entnahmeöffnung aufweisender Speicher, der die abgesetzten Schlammpartikel fasst. Diese können in dem Speicher insbesondere bei einer diskontinuierlichen Entnahme durch die Entnahmeöffnung zwischengespeichert werden. Zur Steuerung des Entnahmevorgangs ist dem Speicher vorzugsweise eine Sonde zugeordnet, durch welche die Menge an abgesetzten Schlammpartikeln ermittelt werden kann. Denkbar ist beispielsweise eine Sonde, welche die optische Dichte des in dem Speicher befindlichen Schlammes bestimmt.

Nicht zuletzt aufgrund des Führungselementes ist es möglich, den Behälter mit einer glatten, durchgehenden Behälterinnenwand auszubilden. Dies bedeutet, dass zwischen dem Fallrohr und der dieses umgebenden Behälterinnenwand keinerlei Halterungen und/oder Abstützungen für das Fallrohr vorgesehen sind. Die in dem Behälter aufsteigende Strömung des zunehmend von den Schlammpartikeln befreiten Abwasser kann somit ungehindert in dem Behälter aufsteigen und durch Ausbildung einer gleichmäßigen laminaren und ungestörten Strömung in bestmöglicher Weise weitere feine Schlammpartikeln absetzen. Es ist nicht auszuschließen, dass aufgrund von Oberflächeneffekten feinste kolloidale Partikel mit dieser aufsteigenden Strömung mitgeschleppt werden, die an der Behälterinnenwand anhaften. So wird mit der vorliegenden Erfindung weiterhin vorgeschlagen, am oberen Ende der Behälterinnenwand einen nach innen vorspringenden Kragen vorzusehen, der eine Mitnahme dieser feinsten Schlammpartikel durch das aufströmende und an einem Überlauf aus dem Behälter abgeführten Wasser verhindert. Der Überlauf weist in an sich bekannter Weise vorzugsweise voll umfänglich an der dort durchlässigen Behälterinnenwand ein Filter auf, das zu einem Ringkanals führt, der das Filter umgibt und in einem Abzugsrohr für das von Schlammpartikeln befreite Wasser mündet.

Der Prallkörper ist vorzugsweise als sphärischer Körper mit konvexer Oberfläche vorgesehen. An seinem unteren Ende kann das Fallrohr mit dem Ziel konisch verbreitert sein, die fallende Abwasserströmung im Bereich der Einleitungsöffnung horizontal umzulenken. Gedacht ist insbesondere an eine konische Verbreiterung des unteren Endes des Fallrohrs. Als bevorzugt werden tulpenträchtig bzw. trompetenförmige Ausgestaltungen angesehen. Bei einer trompetenförmigen Ausgestaltung hat die konische Verbreiterung einen im Wesentlichen kontinuierlichen oder sich kontinuierlich verändernden Radius, wo hingegen bei einer Tulpenform die Innenumfangsfläche der konischen Verbreiterung unmittelbar im Anschluss an das Fallrohr zunächst konkav, danach im Wesentlichen gradlinig und im Anschluss daran im Bereich der Einleitungsöffnung des Rohres konvex ausgebildet ist. Der Prallkörper sollte eine hierzu korrespondierende Kontur haben, was insbesondere bedeutet, dass aufgrund der Kontur des Prallkörpers und der Kontur des unteren Endes des Fallrohres auch bei einer Lageverstellung von Prallkörper zu Fallrohr ein in Strömungsrichtung konstanter bzw. sich gleichmäßig kontinuierlich ändernder Strömungsquerschnitt ausgebildet wird, der die Umlenkung der Strömung von einer im Wesentlichen vertikalen Strömung in eine im Wesentlichen horizontale Strömung an dem Prallkörper begünstigt.

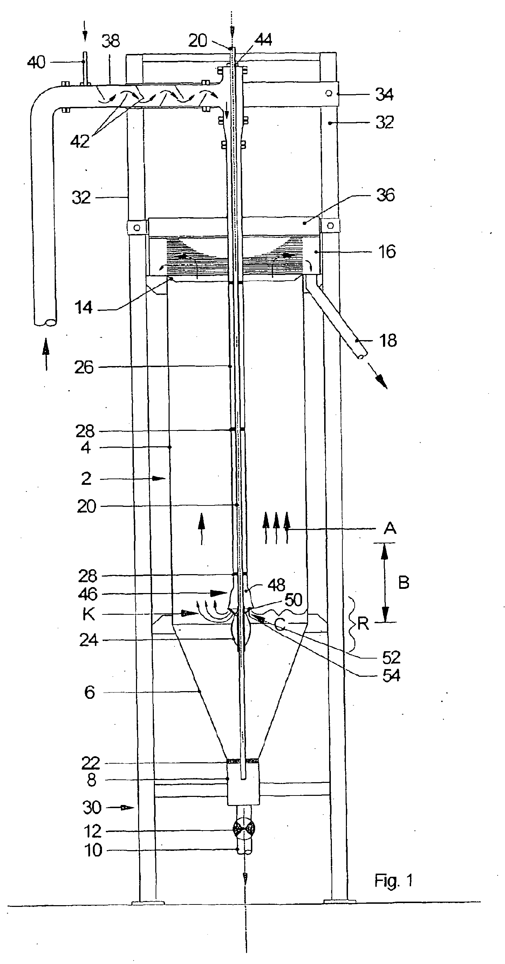

Weitere Einzelheiten und Vorteile der vorliegenden Erfindung ergeben sich aus der nachfolgenden Beschreibung eines Ausführungsbeispiels in Verbindung mit der Zeichnung. Diese zeigt eine Längsschnittansicht einer erfindungsgemäßen Vorrichtung. Die Zeichnung zeigt eine schematische Schnittansicht durch ein Ausführungsbeispiel einer erfindungsgemäßen Vorrichtung.

Die Zeichnung zeigt eine Längsschnittansicht durch ein Ausführungsbeispiel einer Vorrichtung zum Eindicken von im Abwasser mitgeführtem Schlamm mit einem Behälter 2, der einen oberen zylindrischen Abschnitt 4 und einen darunter liegenden trichterförmigen Abschnitt 6 umfasst. Bei dem gezeigten Ausführungsbeispiel hat der Behälter 2 eine rotationssymmetrische Grundform und weist an seinem unteren Ende im Anschluss an den trichterförmigen Abschnitt 6 einen Speicher 8 auf, der durch einen Zylinderabschnitt gebildet ist. Der Boden dieses zylindrischen Speichers 8 ist verschlossen und mit einem Abzugsrohr 10 versehen, welches über ein Ventil 12 geöffnet und verschlossen werden kann.

Im oberen Endbereich des zylinderförmigen Abschnitts 4 ist ein von der Innenwandung des Behälters 2 nach innen vorspringender Kragen 14 vorgesehen, der leicht nach unten zeigt. Oberhalb des Kragens 14 die Wandung des zylinderförmigen Schnitts 4 von einem Ringkanal 16 umgeben. Die Innenwand des Ringkanals 16, die durch die Behälterwand des zylindrischen Abschnitts 4 gebildet wird, ist nach Art eines Filters ausgebildet und erlaubt den Durchtritt von klarem Wasser, hält jedoch verbleibende Schlammpartikel zurück. Der Ringkanal16 ist mit einem Abflussrohr 18 zur Ableitung des gereinigten Wassers verbunden. Dem im oberen Bereich des zylinderförmigen Abschnitts 4 vorgesehenen Filter kann in an sich bekannter Weise eine Rückspüleinrichtung und/oder eine Reinigungseinrichtung vorgesehen sein, beispielsweise mit einem in Umfangsrichtung umlaufenden Abstreifer, der von innen an dem Filter anhaftende Partikel abschabt.

Der Behälter 2 ist nahezu über seine gesamte Länge von einem Führungsrohr 20 durchsetzt. Dieses Führungsrohr 20 wird umfänglich über eine am Übergang zwischen dem trichterförmigen Abschnitt 6 und dem Speicher 8 angeordnete Führungsrohrführung 22 in radialer Richtung fixiert. Die Führungsrohrführung 22 erlaubt eine verschiebliche Abstützung des Führungsrohrs 20. Dementsprechend kann das Führungsrohr 20 in axialer Richtung gegenüber der Führungsrohrführung 22 verschoben werden. In etwa auf Höhe des Übergangs zwischen dem trichterförmigen Abschnitt 6 und dem zylinderförmigen Abschnitt 4 trägt das Führungsrohr 20 einen Prallkörper 24, der ebenfalls als rotationssymmetrisches Bauteil ausgebildet ist und in Längsschnittansicht eine konvexe Oberfläche zeigt. Oberhalb des Prallkörpers 24 mündet das Führungsrohr 20 in ein Fallrohr 26. Zwischen dem Führungsrohr 20 und dem Fallrohr 26 sind in axialem Abstand zueinander Abstandshalter 28 vorgesehen. Jeder der Abstandshalter 28 erlaubt eine verschiebliche Führung des Führungsrohres 20 relativ zu dem Fallrohr 26. Die Abstandshalter 28 können an dem Führungsrohr 20 oder dem Fallrohr 26 befestigt sein. Die Abstandshalter 28 weisen mehrere in Umfangsrichtung mit Abstand zueinander angeordneter Radialstege auf, die zwischen sich einen Freiraum freilassen, so dass eine durch das Fallrohr 26 strömende Strömung die Abstandshalter 28 im Wesentlichen ungestört passieren kann. Der Abstandshalter und insbesondere die Stege der Abstandshalter können im Hinblick auf die gewünschten Strömungsbedingungen in dem Fallrohr optimiert ausgestaltet werden. So kann durch eine entsprechende Ausgestaltung die turbulente Strömung in dem Fallrohr 26 und damit die Flockenbildung begünstigt werden.

Der Behälter 2 wird durch ein Gestell 30 gehalten, welches den Behälter 2 oberseitig überragt. Zwischen zwei einander gegenüberliegenden Stützen 32 des Gestells 30 erstreckt sich eine Traverse 34, welche das Fallrohr 26 trägt und welche höhenverschieblich relativ zu den Stützen 32 ist. Der Behälter 2 weist ferner eine oberseitige Abdeckung 36 auf, die von dem Fallrohr 26 durchsetzt wird. Dort befinden sich Dichtmittel, durch welche der Behälter 2 auch an der Durchtrittsstelle des Fallrohres 26 durch die Abdeckung 36 gasdicht abgeschlossen ist und welcher eine Verschieblichkeit des Fallrohres 26 relativ zu dem Behälter 2 erlauben. Die Abdeckung 36 ist in Form eines höhenverschieblich an den Stützen 32 geführten Deckels ausgebildet, der den Behälter 2 luftdicht abschließt und über eine nicht dargestellte Entgasungsöffnung aufweist, die dem Abzug von Biogasen zur Speicherung und/oder kontrollierten Verbrennung derselben dient. Auf Höhe der Traverse 24 geht ein seitliches Zulaufrohr 38 von dem Fallrohr 26 ab, an dessen vorderen Ende eine Einleitungsleitung 40 für Flockungshilfsmittel vorgesehen ist und welches im weiteren Verlauf Strömungsbarrieren 42 hat, die für eine gute Durchmischung zwischen dem Flockungshilfsmittel und einem in dem Zulaufrohr 38 geführten Abwasser sorgen.

Das obere Ende des Fallrohres 26 ist ebenfalls verschlossen und wird von dem Führungsrohr 20 durchsetzt, welches das Fallrohr 26 oberseitig überragt. Das freie obere Ende des Führungsrohres 20 hat einen nicht dargestellten gasdichten Anschluss, über den gasförmiges Medium in das Führungsrohr 18 eingeleitet werden kann. Das Führungsrohr 20 liegt über einen Anschlag 44 an der oberen Abdeckung des Fallrohres 26 an. Dieser Anschlag 44 kann entlang einer an dem Führungsrohr 20 ausgebildeten Skalierung gegenüber dem Führungsrohr 20 verschoben werden. Durch diese Verschiebebewegung wird das Führungsrohr 20 zusammen mit dem Prallkörper 24 gegenüber dem Fallrohr 26 verschoben.

An dem seinen unteren Ende ist das Fallrohr 26 konisch verbreitert. Bei dem gezeigten Ausführungsbeispiel hat diese Verbreiterung 46 eine tulpenförmige Ausbildung, bei der sich die Innenwandung des Fallrohres 26 zunächst konkav nach außen verbreitert, im Anschluss daran einen im Wesentlichen gradlinigen, vorwiegend leicht nach außen geneigten mittleren Kelchabschnitt 48 ausbildet und im Anschluss an diesen konvex nach außen gekrümmt einen Kelchrand 50 ausformt. Das unterste Ende dieses Kelchrandes 50 umfasst eine Einleitungsöffnung 52 für die durch das Fallrohr 26 fallende Abwasserströmung.

Die Querschnittsfläche der Einleitungsöffnung 52 kann verändert werden. Die maximale Fläche der Einleitungsöffnung berechnet sich aus der Differenz der von dem Kelchrand 50 umfassten Kreisfläche und der Außenumfangsfläche des Führungsrohres 20. Bei der in der Zeichnung gezeigten relativen Stellung von Fallrohr 26 zu Führungsrohr 20 befindet sich der obere Teil des Prallkörpers 24 innerhalb der Verbreiterung 46 und so ist in dieser Stellung die Fläche der Einleitungsöffnung um den Umfang des Prallkörpers 24 am Einleitungspunkt 54 vermindert. Der Einleitungspunkt 54 für die durch das Fallrohr 26 fallende Abwasserströmung liegt in der Einleitungsöffnung 52. Deren Fläche wiederum liegt in der kürzesten Verbindung zwischen dem Kelchrand 50 und der Oberfläche des Prallkörpers 24 und damit schräg zu der Achse des Fallrohres 26. Stromab der Einleitungsöffnung 52 bildet der Prallkörper 24 in der in der Zeichnung gezeigten Stellung eine konvexe Prall- und Führungsfläche aus, welche die fallende Abwasserströmung radial nach außen umlenkt. Es sei darauf hingewiesen, dass die Geometrie des Prallkörpers 24 nicht auf das gezeigte Ausführungsbeispiel beschränkt ist. So kann der Prallkörper 24 ebenso gut trompetenartig mit einer der Verbreiterung 46 entsprechenden Kontur ausgebildet sein.

Wird der Prallkörper 26 tiefer in die Verbreiterung 46 des Prallrohrs 26 eingeschoben, so führt dies zu einer weiteren Verminderung der Austrittsfläche der Einleitungsöffnung 52. Bei dem gezeigten Ausführungsbeispiel kann aufgrund der korrespondierenden Ausbildung von Verbreiterung 46 und Prallkörper 24 am vorderen Ende des Fallrohres 26 ein ringförmiger Strömungskanal von im Wesentlichen konstanter Breite innerhalb der Verbreiterung 46 ausgebildet werden, an dessen Ende sich die Einleitungsöffnung 52 befindet.

Beim Betrieb des gezeigten Ausführungsbeispiels wird über das Zulaufrohr 38 Abwasser eingeleitet und mit dem über die Einleitungsleitung 40 eingebrachten Flockungshilfsmittel im Bereich des durch die Strömungsbarrieren 42 gebildeten statischen Mischer vermischt. Danach fällt das so vorbehandelte Abwasser in Schwerkraftrichtung durch das Fallrohr 26 nach unten und in Richtung auf ein in dem Behälter 2 vorgesehenes Bad. Im eingelaufenen Betriebszustand hat dieses Bad im oberen Bereich des Behälters 2 im Wesentlichen klare Wasserqualität. Das vom Schlammpartikel befreite Wasser läuft über das Filter in den Ringkanal 16. Mit zunehmender Entfernung von der Oberfläche des Bades nimmt die Partikeldichte zu. Feinste Schlammpartikel werden von der in dem Behälter 2 aufsteigenden Strömung, die mit dem Pfeil A gekennzeichnet ist, zunächst mitgeschleppt. Diese feinsten Schlammpartikel sinken ab, gegebenenfalls lagern sie sich an der Innenumfangsfläche des Behälters 2 in dessen zylindrischen Abschnitt 4 an. Der Speicher 8 sammelt die sich absetzenden Schlammpartikel. Dort befindet sich ein stark eingedickter Schlamm. Oberhalb des Speichers und im trichterförmigen Abschnitt 6 des Behälters 2 sinken relativ schwere Schlammpartikel mit relativ hoher Sinkgeschwindigkeit ab.

Durch Höhenverstellung des Fallrohres 26 innerhalb des Behälters 2 kann der Druck am Einleitungspunkt 54 und damit - bei dem zu bevorzugenden pumpenlosen Betrieb der Vorrichtung - die Strömungsgeschwindigkeit der fallenden Abwasserströmung beeinflusst werden. Durch Verschiebung des Prallkörpers 24 zusammen mit dem Führungsrohr 20 relativ zu dem Fallrohr 26 kann darüber hinaus die Querschnittsfläche der Einleitungsöffnung 52 verändert werden. Durch diese beiden Einstellungsmechanismen können die in dem Behälter 2 vorherrschenden Strömungsbedingungen bestmöglich an das Sedimentationsvefialten der Schlammpartikel abhängig von deren Dichte und Größe eingestellt werden.

Beim Einleiten der durch das Fallrohr 26 fallenden Abwasserströmung wird diese aufgrund der Ausgestaltung der Verbreiterung 46 und der Anordnung des Prallkörpers 24 in radialer Richtung kurvenförmig nach außen umgelenkt (bei K). Bereits innerhalb der Verbreiterung 46 wird der fallenden Abwasserströmung insgesamt eine leicht radiale Geschwindigkeitskomponente bis zu dem Einleitungspunkt 54 aufgeprägt. Hinter dem Einleitungspunkt 54 erfolgt eine Umlenkung der fallenden Abwasserströmung. Die schwereren Schlammpartikel können diese Beschleunigung nicht in dem Maße folgen wie das leichtere Wasser und behalten daher die in dem Fallrohr 26 erzeugte Absenkbewegung im Wesentlichen bei. Dies führt zu einer sehr guten Abtrennung von relativ schweren Schlammpartikeln. Im Bereich der Einleitungsöffnung werden ferner turbulente Strömungsbedingungen erzeugt, die eine Entmischung von Feststoffpartikeln und Wasser begünstigen. Die Strömungsenergie des fallenden Abwasserstromes wird in einer hydraulisch-physikalischen Reaktionszone R im Wesentlichen vernichtet, die im Bereich des Einleitungspunktes 54 beginnt. Diese hydraulisch-physikalische Reaktionszone R hat eine gewisse axiale Erstreckung, die im Verhältnis zu der Gesamtlänge des Behälters 2 jedoch gering ist. Hinter dieser Reaktionszone R steigt Wasser in der aufsteigenden Strömung A auf, welches kleinste Schlammpartikel bzw. solche Schlammpartikel mit sich schleppt, die nur eine unwesentlich höhere Dichte als das Wasser haben. Die aufsteigende Strömung A passiert einen Ringspalt C zwischen dem Kelchrand 50 und der Wand des Behälters 2 bereits unter nahezu laminaren Bedingungen, die ein Absinken auf dieser leichten und kleinen Schlammpartikel aus der aufsteigenden Strömung A begünstigen. Vor der Wand des Behälters entsteht eine Beruhigungszone B, in der durch die von dem Prallkörper maßgeblich erzeugte Zentrifugalkraft nach außen beförderten schwereren Partikeln nach starker negativer Beschleunigung ausfällen und in den trichterförmigen Abschnitt 6 absinken. Laminar ist im wesentlichen die Strömung in dem Ringspalt C. In der sich hinter dem Ringspalt C erstreckenden Beruhigungszone B richtet sich die aufsteigende Strömung koaxial zu dem Fallrohr 26 aus. Die Beruhigungszone B befindet sich innerhalb des zylindrischen Abschnitts 4 und kennzeichnet im Übrigen auch in etwa denjenigen Bereich, innerhalb dessen der Einleitungspunkt 54 durch Verschiebung des Fallrohres 26 in seiner Höhe verändert werden kann. Sämtliche Schlammpartikel sammeln sich in dem trichterförmigen Abschnitt 6, rutschen auf dessen Innenumfangswand ab und sammeln sich schließlich in dem Speicher 8 an. Dort überwacht ein nicht dargestellter Sensor die Dichte des Sediments und steuert einen diskontinuierlichen Abzug des Sediments über das Abzugsrohr 10 durch Öffnen des Ventils 12. Hierzu kann eine Saugpumpe in Gang gesetzt werden, die an das Abzugsrohr 10 angeschlossen ist.

Bei einer Verfestigung des Sediments im Bereich des Speichers 8 kann über das Führungsrohr 20 Luft oder Wasser in den Speicher 8 eingeblasen und damit die Verfestigung des Sediments aufgehoben werden, so dass ein Abzug des Sediments durch das Abzugsrohr 10 möglich ist. Auch ist es möglich, über das Führungsrohr 20 Flüssigkeit in das Bad einzuleiten, um evtl. unerwünschte Störungen der Reaktionszone R innerhalb des Behälters auszugleichen, die sich beim Abzug des Schlammes aus dem Speicher 8 ergeben können.

## Patentansprüche

1. Vorrichtung zum Eindicken von in Abwasser mitgeführtem Schlamm umfassend einen Behälter (2), der einen trichterförmigen Abschnitt (6) aufweist,
ein Fallrohr (26), das in dem Behälter (2) sich in Längsrichtung erstreckend angeordnet ist und sich über eine Einleitungsöffnung (52) zum Einleiten des durch das Fallrohr fallenden Abwasserstroms zu dem Behälter öffnet, und
eine am unteren Ende des trichterförmigen Abschnitts ausgebildete Entnahmeöffnung zur Entnahme von abgesetzten Schlammpartikeln aus dem Behälter (2), **gekennzeichnet durch**
einen im Bereich der Einleitungsöffnung (52) angeordneten Prallkörper (24), **durch** den der Abwasserstrom umgelenkt wird,
wobei das Fallrohr (26) längs verschieblich zu dem Behälter (2) geführt und gegenüber diesem festlegbar ist, und wobei ein in dem Fallrohr (26) angeordnetes, such in Längsrichtung zu dem Fallrohr (26) erstrechendes Führungselement (20), dem sich zwischen dem Fallrohr (26) und dem und Führungselement (20) befindliche Abstandselemente (28) zugeordnet sind und welches die Verchiebebewegung des Fallrohres (26) relativ zu dem Behälter führt,
und welches den Prallkörper (24) trägt und längs verschieblich zu dem Behälter (2) und dem Fallrohr (26) gegenüber dem Fallrohr (26) festlegbar ist.

2. Vorrichtung nach Anspruch 1, **dadurch gekennzeichnet, dass** das Fallrohr (26) derart festlegbar ist, dass die Einleitungsöffnung (52) lediglich oberhalb des trichterförmigen Abschnitts (6) angeordnet werden kann.

3. Vorrichtung nach Anspruch 1 oder 2, **dadurch gekennzeichnet, dass** das Führungselement (20) als bis in den unteren Bereich des trichterförmigen Abschnitts (6) reichendes Führungsrohr (20) ausgebildet ist.

4. Vorrichtung nach einem der Ansprüche 1 bis 3, **gekennzeichnet durch** eine im unteren Bereich des trichterförmigen Abschnitts (6) angeordnete Führungsrohrführung (22).

5. Vorrichtung nach einem der Ansprüche 1 bis 4, **dadurch gekennzeichnet, dass** das Führungsrohr (20) an eine Druckmediumquelle anschließbar ist und die Austrittsöffnung des Führungsrohres (20) im unteren Bereich des trichterförmigen Abschnitts (6) angeordnet ist.

6. Vorrichtung nach einem der Ansprüche 1 bis 5, **gekennzeichnet durch** einen am unteren Ende des trichterförmigen Abschnitts (6) angeordneten und die Entnahmeöffnung aufweisenden Speicher (8).

7. Vorrichtung nach Anspruch 6, **dadurch gekennzeichnet, dass** dem Speicher (8) wenigstens eine Sonde zum Messen der Menge an abgesetzten Schlammpartikeln zugeordnet ist.

8. Vorrichtung nach einem der Ansprüche 1 bis 7, **dadurch gekennzeichnet, dass** der Behälter (2) eine glatte, durchgehende Behälterinnenwand ausbildet, deren oberes Ende durch einen nach innen vorspringenden Kragen (14) begrenzt ist.

9. Vorrichtung nach einem der Ansprüche 1 bis 8, **dadurch gekennzeichnet, dass** das Fallrohr (26) an seinem unteren Ende konisch verbreitert ist.

10. Vorrichtung nach Anspruch 9, **dadurch gekennzeichnet, dass** das Fallrohr (26) an seinem unteren Ende tulpen- bzw. kelchförmig ausgebildet ist.

11. Vorrichtung nach Anspruch 9 oder 10, **dadurch gekennzeichnet, dass** die Kontur des verbreiterten unteren Endes (46) des Fallrohres (26) korrespondierend zu der Kontur des Prallkörpers (24) ausgebildet ist.

12. Vorrichtung nach einem der Ansprüche 1 bis 11, **dadurch gekennzeichnet, dass** der Behälter (2) gasdicht ist und mit einer Entgasungsöffnung zum kontrollierten Abführen von Fäulnisgasen aus dem Behälter (2) versehen ist.

13. Vorrichtung nach Anspruch 12, **dadurch gekennzeichnet, dass** die Entgasungsöffnung mit einem Biofilter oder Gaswäscher verbunden ist.

## Claims

1. A device for thickening sludge carried along in waste water comprising
a container (2), having a funnel-shaped section (6), a soil pipe (26), arranged in the container to extend in a longitudinal direction and opening into the container (2) through an inlet opening (52) for introducing the waste water flow falling through the soil pipe (26), and
a removal opening formed at the lower end of the funnel-shaped section for removing separated sludge particles from the container (2),
**characterized by**
a baffle (24) arranged in the region of the inlet opening (52), by which the waste water flow is deflected,
whereby the soil pipe (26) is guided longitudinally displaceable with respect to the container (2) and fixable with the same, and
whereby a guiding member (20), arranged in the soil pipe (26) and extending in the longitudinal direction of the soil pipe (26), to which spacer elements (28) located between the soil pipe (26) and the guiding member (20) are assigned and which guides the sliding movement of the soil pipe (26) relatively to the container (2), and which carries the baffle (24) and is longitudinally displaceable with respect to the container (2) and the soil pipe (26) and fixable with respect to the soil pipe (26).

2. The device according to claim 1, **characterized in that** the soil pipe (26) is fixable in such a way that the inlet opening (52) can be arranged merely above the funnel-shaped section (6).

3. The device according to claim 1 or 2, **characterized in that** the guiding member is configured as a guide pipe (20) extending into the lower portion of the funnel-shaped section (6).

4. The device according to one of the claims 1 to 3, **characterized by** a guide pipe guide (22) arranged in the lower portion of the funnel-shaped section (6).

5. The device according to one of the claims 1 to 4, **characterized in that** the guide pipe (20) is connectable to a pressure medium source and that the outlet opening of the guide pipe (20) is arranged in the lower portion of the funnel-shaped section (6).

6. The device according to one of the claims 1 to 5, **characterized by** a reservoir (8) arranged in the lower end of the funnel-shaped section (6) and comprising the removal opening.

7. The device according to claim 6, **characterized in that** at least one probe for measuring the quantity of separated sludge particles is assigned to the reservoir (8).

8. The device according to one of the claims 1 to 7, **characterized in that** the container (2) has a smooth continuous container inner wall the upper end of which is limited by an inwardly projecting collar (14).

9. The device according to one of the claims 1 to 8, **characterized in that** the soil pipe (26) is conically widened at its lower end.

10. The device according to claim 9, **characterized in that** the soil pipe (26) is tulip- or bell-shaped, respectively, at its lower end.

11. The device according to claim 9 or 10, **characterized in that** the contour of the widened lower end (46) of the soil pipe (26) is formed to the contour of the baffle (24).

12. The device according to one of the claims 1 to 11, **characterized in that** the container (2) is gasproof and provided with an air vent for the controlled withdrawal of putrefaction gases from the container (2).

13. The device according to claim 12, **characterized in that** the air vent is connected to a biological filter or gas washer.

## Revendications

1. Dispositif d'épaississement de boues entraînées dans des eaux usées, comprenant une cuve (2) présentant une section en forme d'entonnoir (6), un tube de descente (26) agencé dans la cuve (2) en direction longitudinale et ouvert sur un orifice d'entrée (52) pour introduire le flux d'eaux usées sortant du tube de descente dans la cuve et
un orifice de prélèvement agencé à l'extrémité inférieure de la section en forme d'entonnoir pour le prélèvement de particules de boue déposées dans la cuve (2), **caractérisé par**
un déflecteur (24) agencé dans la zone de l'orifice d'entrée (52), par lequel le flux d'eaux usées est dévié,
dans lequel le tube de descente (26) coulisse longitudinalement le long de la cuve (2) et peut être fixé face à celui-ci, et dans lequel un élément de guidage (20) agencé dans le tube de descente (26), s'étendant en direction longitudinale du tube de descente (26), est associé aux éléments écarteurs (28) se trouvant entre le tube de descente (26) et l'élément de guidage (20) et guide le déplacement coulissant du tube de descente (26) par rapport à la cuve, et qui supporte le déflecteur (24) et peut être placé de façon coulissante longitudinalement par rapport à la cuve (2) et au tube de descente (26), en face du tube de descente (26).

2. Dispositif selon la revendication 1, **caractérisé en ce que** le tube de descente (26) peut être placé de telle manière que l'orifice d'entrée (52) peut être agencé juste au-dessus de la section en forme d'entonnoir (6).

3. Dispositif selon la revendication 1 ou 2, **caractérisé en ce que** l'élément de guidage (20) est conçu comme un tube de guidage (20) allant jusqu'à la partie inférieure de la section en forme d'entonnoir (6).

4. Dispositif selon l'une des revendications 1 à 3, **caractérisé par** un guidage de tube de guidage (22) agencé dans la partie inférieure de la section en forme d'entonnoir (6).

5. Dispositif selon l'une des revendications 1 à 4, **caractérisé en ce que** le tube de guidage (20) peut être connecté à une source de fluide sous pression et **en ce que** l'orifice de sortie du tube de guidage (20) est agencé dans la partie inférieure de la section en forme d'entonnoir (6).

6. Dispositif selon l'une des revendications 1 à 5, **caractérisé par** une mémoire (8) agencée à l'extrémité inférieure de la section en forme d'entonnoir (6) et comportant l'orifice de prélèvement.

7. Dispositif selon la revendication 6, **caractérisé en ce que** la mémoire (8) est assignée à au moins une sonde de mesure de la quantité de particules de boue déposées.

8. Dispositif selon l'une des revendications 1 à 7, **caractérisé en ce que** la cuve (2) comporte une paroi interne lisse continue, dont l'extrémité supérieure est limitée par un col (14) saillant vers l'intérieur.

9. Dispositif selon l'une des revendications 1 à 8, **caractérisé en ce que** le tube de descente (26) est élargi en forme de cône à son extrémité inférieure.

10. Dispositif selon la revendication 9, **caractérisé en ce que** le tube de descente (26) est conformé en forme de tulipe ou de coupe à son extrémité inférieure.

11. Dispositif selon la revendication 9 ou 10, **caractérisé en ce que** le contour de l'extrémité inférieure élargie (46) du tube de descente (26) est conçu conformément au contour du déflecteur (24).

12. Dispositif selon l'une des revendications 1 à 11, **caractérisé en ce que** la cuve (2) est étanche aux gaz et comporte un orifice de dégazage pour contrôler l'élimination de gaz de décomposition provenant de la cuve (2).

13. Dispositif selon la revendication 12, **caractérisé en ce que** l'orifice de dégazage est connecté à un biofiltre ou à un laveur de gaz.
